# EUROPÄISCHE PATENTANMELDUNG

(11) **EP 0 832 789 A2**
(43) Veröffentlichungstag der Anmeldung: **01.04.1998**
(21) Anmeldenummer: 97114834.1
(22) Anmeldetag: 27.08.1997
(51) Int. Cl.: B60R 21/20

(54) **Einrichtung zum Befestigen eines Gassackmoduls**

(30) Priorität: 27.09.1996 DE 29616892 U
(71) Anmelder: TRW Occupant Restraint Systems GmbH, 73551 Alfdorf (DE)
(72) Erfinder: Fischer, Anton, 73572 Heuchlingen (DE)
(74) Vertreter: Kitzhofer, Thomas, Dipl.-Ing.

(57) **Zusammenfassung**

Eine Einrichtung zum Befestigen eines Gassackmoduls (1) an einem Fahrzeugteil, insbesondere an einer Lenkradnabe (17), wobei das Gassackmodul (1) ein Gehäuse (9) mit wenigstens einer daran befestigten Mutter (21) aufweist, in die eine Schraube (25) zur Arretierung des Gassackmoduls (1) eingedreht werden kann, ist dadurch gekennzeichnet, daß die Mutter (21) am Fahrzeugteil arretiert werden kann und in einer langgestreckten Aufnahmeöffnung (19) im Gehäuse (9) oder in einem an ihm starr befestigten Teil relativ zum Gehäuse (9) im wesentlichen linear verschiebbar aufgenommen ist und eine Führung für das Gehäuse (9) bildet.

## Beschreibung

Die Erfindung betrifft eine Einrichtung zum Befestigen eines Gassackmoduls an einem Fahrzeugteil, insbesondere an einer Lenkradnabe, wobei das Gassackmodul ein Gehäuse mit wenigstens einer daran befestigten Mutter aufweist, in die eine Schraube zur Arretierung des Gassackmoduls am Fahrzeugteil eingedreht werden kann.

Bislang werden Gassackmodule mit einem Lenkrad vorderseitig oder rückseitig verschraubt. Am Gehäuse des Gassackmoduls sind hierzu Muttern, üblicherweise durch Einpressen, drehfest angebracht, in die dann die entsprechenden Schrauben bei der Montage eingedreht werden. Ist eine bewegliche Aufnahme des Gassackmoduls erwünscht, ist eine Zwischenplatte vorgesehen, die zwischen dem Gassackmodul und dem Lenkrad federnd gelagert ist. Die Zwischenplatte ist längsbeweglich am Lenkradskelett befestigt, und das Gassackmodul fest an der Zwischenplatte verschraubt. Diese Art der Befestigung ist relativ umständlich und kostet erhebliche Montagezeit.

Die Erfindung schafft eine Einrichtung zum Befestigen eines Gassackmoduls an einem Fahrzeugteil, die das umständliche Montieren einer Zwischenplatte unnötig macht. Das Gassackmodul kann dadurch schnell am Fahrzeugteil montiert werden. Die Einrichtung ist dadurch gekennzeichnet, daß die Mutter am Fahrzeugteil arretiert werden kann und in einer langgestreckten Aufnahmeöffnung im Gehäuse oder in einem an ihm starr befestigten Teil relativ zum Gehäuse im wesentlichen linear verschiebbar aufgenommen ist und eine Führung für das Gehäuse bildet. Anstelle der bislang vorgesehenen Zwischenplatte dient die ohnehin vorgesehene Mutter als Führungselement für das Gassackmodul, so daß die Zwischenplatte entfallen kann und weniger Teile montiert werden müssen. Die Mutter hat deshalb bei der erfindungsgemäßen Einrichtung eine Doppelfunktion. Aufgrund der geringeren Teileanzahl ergibt sich auch eine geringere maximale Schwankung der Abmessungen des Gassackmoduls.

Die Aufnahmeöffnung kann als Führungsnut oder Führungsschlitz ausgebildet sein. Ein Federelement am Gassackmodul drückt dieses in seine Grundstellung, so daß das Gassackmodul federnd nachgiebig gelagert ist. Bei der bevorzugten Ausführungsform, die sich durch eine gute Zugänglichkeit der Schraube während des Befestigens des Gassackmoduls auszeichnet, weist das Gehäuse mindestens einen seitlichen Lappen mit einem seitlich abstehenden Abschnitt und einem sich daran anschließenden, parallel zur Verschieberichtung des Gassackmoduls abgewinkelten Endabschnitt auf, wobei der Endabschnitt mit der Aufnahmeöffnung versehen ist.

Eine Einführöffnung im abstehenden Abschnitt erstreckt sich bis in die Aufnahmeöffnung und erlaubt ein Einführen der Mutter in Letztere. Die Mutter ist dadurch sehr einfach und schnell am Gehäuse montierbar und kann mit diesem und der zuvor in sie eingedrehten Schraube eine vormontierte Einheit bilden. Diese Einheit, die üblicherweise von einem Zulieferer bereitgestellt wird, kann bei der Fahrzeugmontage ohne zusätzliche vorzusehende Befestigungsmittel am Fahrzeugteil angeschraubt werden, da die Mutter und die Schraube bereits vormontiert sein können.

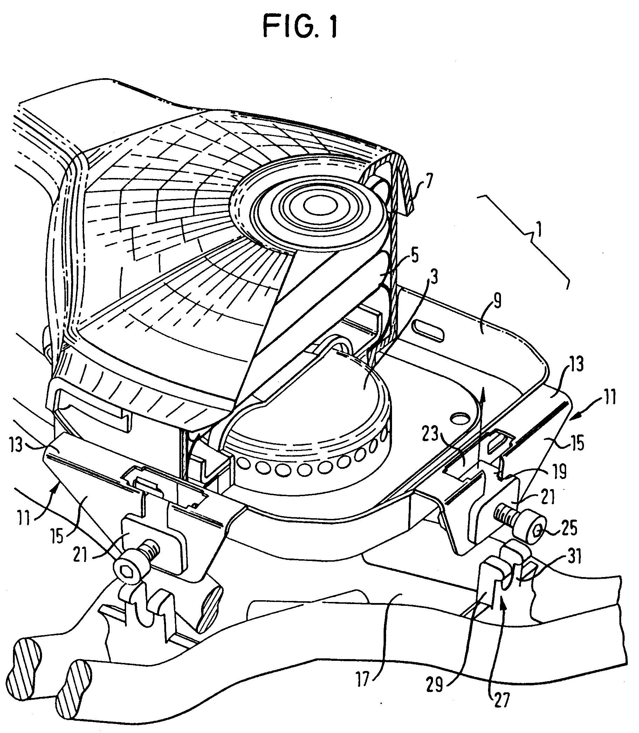

Weitere Merkmale und Vorteile der Erfindung ergeben sich aus der nachfolgenden Beschreibung einer bevorzugten Ausführungsform und aus der Zeichnung, auf die Bezug genommen wird. In der Zeichnung zeigt Fig. 1 eine perspektivische Ansicht eines Gassackmoduls und einer Lenkradnabe, die durch die erfindungsgemäße Einrichtung verschiebbar miteinander verbunden werden können.

In Fig. 1 ist ein Gassackmodul 1 dargestellt, das einen Gasgenerator 3 und einen Gassack 5 umfaßt. Das Gassackmodul 1 wird durch eine Abdeckung 7 umschlossen und umfaßt ferner ein wannenartiges Gehäuse 9 aus Blech. Vom Außenrand des Gehäuses 9 stehen mehrere Lappen 11, von denen nur zwei gezeigt sind, seiflich ab. Die Lappen 11 sind einstückig mit dem Gehäuse 9 verbunden. Jeder Lappen 11 weist einen seitlich abstehenden Abschnitt 13 und einen sich daran anschließenden, nach unten abgewinkelten Endabschnitt 15 auf.

Das Gassackmodul 1 ist durch eine Einrichtung an einer Lenkradnabe 17 verschiebbar gelagert. Die Befestigung soll dem Gassackmodul 1 die Möglichkeit geben, bei Betätigen des in die Abdeckung 7 integrierten Hornschalters nachzugehen. Die Einrichtung umfaßt eine in einer Aufnahmeöffnung 19 in Form eines Aufnahmeschlitzes im Endabschnitt 15 verschiebbar geführte, als Nutenstein ausgebildete Mutter 21, die mit elektrisch isolierendem Material umgeben ist. Die Mutter 21 weist auf gegenüberliegenden Seiten jeweils eine Nut auf, in die der Rand der Aufnahmeöffnung 19 ragt. Dadurch ist die Mutter 21 linear verschiebbar und drehfest in der Aufnahmeöffnung 19 gelagert.

Zum einfachen Einbau der Mutter 21 kann diese einfach von oben durch eine Einführöffnung 23 im seiflich abstehenden Abschnitt 13 in die Aufnahmeöffnung 19 gesteckt werden, bis sie am nicht gezeigten unteren Rand der Aufnahmeöffnung 19 anstößt, da diese nur nach oben offen ist.

Eine in jede Mutter 21 eingedrehte, selbstfurchende und damit selbstsichernde Schraube 25 bildet zusammen mit der Mutter 21 eine erste vormontierte Einheit, die in das Gehäuse 9 eingeführt werden kann und zusammen mit dem Gehäuse 9 eine zweite vormontierte Einheit bildet. Diese zweite Einheit kann beispielsweise von einem Automobilzulieferer komplett an einen Automobilhersteller geliefert werden, der zum Montieren der Einheit keine zusätzlichen Befestigungsmittel mehr bereitstellen muß. Zum Befestigen der Einheit weist die Lenkradnabe 17 mehrere an sie angeformte Halteteile 27 auf. Die Halteteile 27 stehen nach oben annähernd rechtwinklig zur Oberseite von der Lenkradnabe 17 ab und weisen jeweils ein freies Ende auf, das sich in zwei Stege 29, 31 aufspaltet. Der Zwischenraum zwischen den Stegen 29, 31 ist geringfügig breiter als der Durchmesser der Schraube 17 im Bereich ihres Schaftes. Die Stege 29 und 31 weisen an ihrem freien Ende jeweils eine seitlich nach außen vorstehende Nase auf. Die Innenseiten der Halteteile 27 verlaufen parallel zueinander und parallel zu den abgewinkelten Endabschnitten 15.

Zum Montieren des Gassackmoduls 1 wird dieser von oben einfach auf die Lenkradnabe 17 aufgesetzt, wobei die Schraubenschäfte zwischen die Stege 29, 31 greifen. Ein auf der Unterseite des Gehäuses 19 angebrachtes, nicht gezeigtes Federelement, das sich an der Oberseite der Lenkradnabe 17 abstützt, muß beim Montieren des Moduls 1 zusammengedrückt werden. Anschließend werden die Schrauben 25 angezogen. Dabei greifen die Schraubenköpfe unter die Nasen der Stege 29, 31, so daß die Muttern 21 form- und kraftschlüssig am Halteteil 27 befestigt sind. Die Muttern 21 bilden dadurch Führungen für das Gehäuse 9, welches bei montiertem Gassackmodul 1 nach oben in die Grundstellung gedrückt wird, bis die Muttern 21 am unteren Rand der Aufnahmeöffnungen 19 anliegen.

Beim Betätigen des Hornschalters kann sich das Gassackmodul 1 nach unten in Richtung Lenkradnabe 17 bewegen und wieder zurückfedern.

Die Einrichtung zum Befestigen benötigt wenig Teile, nämlich nur die in eine Aufnahmeöffnung 19 einführbare Mutter 21, die Schraube 25 sowie das Halteteil 27.

## Patentansprüche

1. Einrichtung zum Befestigen eines Gassackmoduls (1) an einem Fahrzeugteil, insbesondere an einer Lenkradnabe (17), wobei das Gassackmodul (1) ein Gehäuse (9) mit wenigstens einer daran befestigten Mutter (21) aufweist, in die eine Schraube (25) zur Arretierung des Gassackmoduls (1) eingedreht werden kann, dadurch gekennzeichnet, daß die Mutter (21) am Fahrzeugteil arretiert werden kann und in einer langgestreckten Aufnahmeöffnung (19) im Gehäuse (9) oder in einem an ihm starr befestigten Teil relativ zum Gehäuse (9) im wesentlichen linear verschiebbar aufgenommen ist und eine Führung für das Gehäuse (9) bildet.

2. Einrichtung nach Anspruch 1, dadurch gekennzeichnet, daß die Aufnahmeöffung (19) als Führungsnut oder Führungsschlitz ausgebildet ist.

3. Einrichtung nach Anspruch 1 oder 2, dadurch gekennzeichnet, daß ein Federelement am Gassackmodul (1) vorgesehen ist, das das Gassackmodul (1) in seine Grundstellung drückt.

4. Einrichtung nach einem der vorstehenden Ansprüche, dadurch gekennzeichnet, daß die Mutter (21) an gegenüberliegenden Seiten parallele Nuten aufweist, in die der Rand der Aufnahmeöffnung (19) eingreift.

5. Einrichtung nach einem der vorstehenden Ansprüche, dadurch gekennzeichnet, daß die Aufnahmeöffnung (19) an einem Ende offen ist und die Mutter (21) über dieses offene Ende in die Aufnahmeöffnung (19) eingeführt werden kann.

6. Einrichtung nach einem der vorstehenden Ansprüche, dadurch gekennzeichnet, daß das Gehäuse (9) wenigstens einen seitlichen Lappen (11) mit einem seitlich abstehenden Abschnitt (13) und einem sich daran anschließenden, parallel zur Verschieberichtung des Gassackmoduls (1) abgewinkelten Endabschnitt (15) aufweist und daß der Endabschnitt (15) mit der Aufnahmeöffnung (19) versehen ist.

7. Einrichtung nach Anspruch 6, dadurch gekennzeichnet, daß sich eine Einführöffnung (23) im abstehenden Abschnitt (13) des Lappens (11) bis zur Aufnahmeöffnung (19) erstreckt und ein Einführen der Mutter (21) in die Aufnahmeöffnung (19) erlaubt.

8. Einrichtung nach einem der vorstehenden Ansprüche, dadurch gekennzeichnet, daß die Mutter (21) und die in sie eingedrehte Schraube (25) eine erste vormontierte Einheit und diese Einheit mit dem Gassackmodul (1) eine zweite vormontierte Einheit bilden.

9. Einrichtung nach einem der vorstehenden Ansprüche, dadurch gekennzeichnet, daß am Fahrzeugteil zu jeder Mutter (21) ein abstehendes Halteteil (27), das sich in zwei Stege (29, 31) aufspaltet, vorgesehen ist, wobei der Schaft der Schraube (25) beim Aufsetzen des Gassackmoduls (1) auf das Fahrzeugteil zwischen die Stege (29, 31) greift, und daß die Mutter (21) am Halteteil (27) befestigt ist.

10. Einrichtung nach einem der vorstehenden Ansprüche, dadurch gekennzeichnet, daß die Mutter (21) mit einer elektrisch isolierenden Schicht umgeben ist.
